# EUROPÄISCHE PATENTSCHRIFT

(11) **EP 3 993 894 B1**
(45) Veröffentlichungstag und Bekanntmachung des Hinweises auf die Patenterteilung: **09.04.2025**
(21) Anmeldenummer: 20736302.9
(22) Anmeldetag: 30.06.2020
(51) Int. Cl.: F24F 8/175, B01D 53/84, B01D 46/24

(54) **FILTERGEBILDE FÜR EIN AKTIV DURCHLÜFTETES LUFTREINIGUNGSSYSTEM**
FILTER FABRIC FOR AN ACTIVELY VENTILATED AIR PURIFICATION SYSTEM
STRUCTURE FILTRANTE POUR UN SYSTÈME DE PURIFICATION D'AIR ACTIVEMENT VENTILÉ

(30) Priorität: 01.07.2019 DE 102019209602
(43) Veröffentlichungstag der Anmeldung: 11.05.2022
(73) Patentinhaber: Green City Solutions GmbH, 15741 Bestensee (DE)
(72) Erfinder: PUHLMANN, Peter, 15711 Königs Wusterhausen (DE)
(74) Vertreter: Patentanwälte Ruff, Wilhelm, Beier, Dauster & Partner mbB
(86) Internationale Anmeldenummer: PCT/EP2020/068350
(87) Internationale Veröffentlichungsnummer: WO 2021/001345

(56) Entgegenhaltungen:
- WO-A1-2018/202571
- WO-A1-2019/043327
- CN-B- 103 316 584
- DE-U1- 9 304 082

## Beschreibung

Die Erfindung betrifft ein Filtergebilde für ein aktiv durchlüftetes Luftreinigungssystem mit einem aus wenigstens einem lebenden Moos gebildeten Filtersubstrat, das zur Durchlüftung entlang einer Dickenrichtung vorgesehen ist, sowie mit einem Trägergebilde, auf welchem das Filtersubstrat kultiviert und angeordnet ist.

Ein derartiges Filtergebilde ist aus der WO 2018/202571 A1 bekannt und zur Verwendung in einem aktiv durchlüfteten Luftreinigungssystem vorgesehen. Das bekannte Filtergebilde weist ein aus wenigstens einem lebenden Moos gebildetes Filtersubstrat auf, das auf einem Trägergebilde angeordnet ist. Als Trägergebilde ist eine Filtermatte vorgesehen. Die Filtermatte kann Mineralwolle, Kokos- oder Glasfasern, letztere in Gestalt einer Schwebstofffiltermatte, beinhalten. Dabei ist allgemein bekannt, dass zur Herstellung des Filtergebildes das wenigstens eine lebende Moos unter Ausbildung des Filtersubstrates auf dem Trägergebilde kultiviert wird. Im Betrieb des Luftreinigungssystems wird ein Luftmassenstrom durch das Filtergebilde gefördert. Das Luftreinigungssystem weist hierfür eine Durchlüftungseinheit in Form eines Lüfters auf. Das Filtersubstrat wird hierbei in seiner Dickenrichtung von dem geförderten Luftmassenstrom durchströmt bzw. durchlüftet.

Aufgabe der Erfindung ist es, ein Filtergebilde der eingangs genannten Art bereitzustellen, das eine effiziente aktive Durchlüftung und gleichzeitig eine verbesserte Kultivierung des lebenden Mooses ermöglicht.

Diese Aufgabe wird dadurch gelöst, dass das Trägergebilde eine Wabenstruktur aufweist, die aus einer Vielzahl von Wabenzellen gebildet ist, in welchen das Filtersubstrat kultiviert und angeordnet ist und deren Wabenwandungen parallel zur Dickenrichtung des Filtersubstrates erstreckt sowie saugfähig gestaltet sind. Durch die erfindungsgemäße Lösung werden Druckverluste bei der Durchlüftung des Filtersubstrates vermieden. Zu diesem Zweck ist erfindungsgemäß vorgesehen, dass das Trägergebilde eine Wabenstruktur mit spezifischer Gestaltung aufweist. Diese spezifische Gestaltung sieht vor, dass die Wabenwandungen der einzelnen Wabenzellen der Wabenstruktur parallel zur Dickenrichtung des Filtersubstrates erstreckt sind. Bei einer in Dickenrichtung des Filtersubstrates gerichteten Durchströmung des Filtersubstrates tritt daher eine vergleichsweise geringe Wandreibung und Dissipation an dem Trägergebilde auf. Dies wirkt den besagten Druckverlusten entgegen und ermöglicht im Ergebnis eine effiziente aktive Durchlüftung des Filtergebildes. Gleichzeitig wird durch die erfindungsgemäße Lösung eine hinreichende Wasserversorgung des lebenden Mooses ermöglicht. Zu diesem Zweck sind die Wabenwandungen erfindungsgemäß saugfähig gestaltet. Infolge der saugfähigen Gestaltung können die Wabenwandungen Wasser aufnehmen, speichern und an das lebende Moos abgeben. Hierdurch kann das lebende Moos in vorteilhafter Weise mit Wasser versorgt werden. Dies ermöglicht eine verbesserte Nährstoffversorgung und somit im Ergebnis eine verbesserte Kultivierung des lebenden Mooses. Das Filtersubstrat kann aus mehreren nach Art und/oder Gattung unterschiedlichen lebenden Moosen gebildet sein. Zusätzlich zu dem wenigstens einen lebenden Moos kann das Filtersubstrat wenigstens eine weitere lebende Pflanze aufweisen. Vorzugsweise besteht das Filtersubstrat aus einem lebenden Moos genau einer Art und Gattung. Die Wabenzellen können jeweils einen mehreckigen oder runden Querschnitt aufweisen. Das lebende Moos ist in den Wabenzellen angeordnet und füllt deren Volumen vorzugsweise vollständig aus. Im betriebsfertig in dem Luftreinigungssystem montierten Zustand ist die Dickenrichtung des Filtersubstrates vorzugsweise parallel zu einem durch das Filtersubstrates geförderten Luftmassenstrom orientiert. Die Wabenzellen sind an einander in Dickenrichtung gegenüberliegenden Stirnendbereichen vorzugsweise jeweils offen. Die saugfähige Gestaltung der Wabenwandungen ist vorzugsweise mittels einer Fertigung der Wabenwandungen aus einem saugfähigen Material erreicht. Alternativ oder zusätzlich können die Wabenwandungen eine saugfähige Beschichtung oder dergleichen aufweisen.

In Ausgestaltung der Erfindung bilden die Wabenzellen jeweils einen zwischen einer Lufteintrittsseite und einer Luftaustrittsseite des Filtergebildes durchgängig längserstreckten Durchlüftungskanal. Durch eine solche beidseits offene Gestaltung der Wabenzellen kann eine weitere Verringerung der Druckverluste erreicht werden. Die Lufteintrittsseite und die Luftaustrittsseite sind an in Dickenrichtung des Filtersubstrates gegenüberliegenden Stirnseiten des Filtergebildes angeordnet. Bei der aktiven Durchlüftung des Filtergebildes strömt ein Luftmassenstrom ausgehend von der Lufteintrittsseite durch das Filtersubstrat und tritt auf der Luftaustrittsseite aus dem Filtergebilde aus. Vorzugsweise sind die Durchlüftungskanäle jeweils gerade längserstreckt, was jedoch nicht zwingend ist.

In weiterer Ausgestaltung der Erfindung sind die Wabenwandungen aus einem saugfähigen Material gefertigt. Insbesondere gegenüber einer saugfähigen Beschichtung der Wabenwandungen kann hierdurch eine vereinfachte Fertigung erreicht werden. Vorzugsweise ist das Material ein Textilmaterial. Das Textilmaterial kann beispielsweise ein Gewebe, Gewirke, Gestricke oder Geflechte sein. Das Textilmaterial kann aus Natur- und/oder Kunstfasern gefertigt sein. Alternativ können die Wabenwandungen in vorteilhafter Weise aus Papier, Karton und/oder Pappe gefertigt sein. Vorzugsweise ist die gesamte Wabenstruktur aus saugfähigem Material gefertigt.

In weiterer Ausgestaltung der Erfindung ist das Trägergebilde aus einem dreidimensionalen Gewirke gefertigt. Dreidimensionale Gewirke können auch als 3D-Gewirke oder Abstandsgewirke bezeichnet werden und sind als solche grundsätzlich bekannt. 3D-Gewirke werden insbesondere im Bereich der Polsterung von Kraftfahrzeugsitzen verwendet. Dabei hat sich überraschender Weise gezeigt, dass die Fertigung des Trägergebildes aus dem dreidimensionalen Gewirke besondere Vorteile hinsichtlich der Kultivierung des lebenden Mooses bietet. Dies ist eine besonders bevorzugte Ausgestaltung der Erfindung. Das dreidimensionale Gewirke kann auf grundsätzlich bekannte Weise Maschenreihen, Maschenstäbchen und Polstäbchen aufweisen. Vorzugsweise sind eine Anzahl der Maschenreihen pro Zentimeter und eine Anzahl der Maschenstäbchen pro Zentimeter aufeinander abgestimmt. Zusätzlich kann zu vorgenanntem Verhältnis eine Anzahl der Polstäbchen pro Quadratzentimeter abgestimmt sein.

In weiterer Ausgestaltung der Erfindung ist eine Wandstärke der Wabenwandungen auf eine erforderliche Feuchtigkeitsmenge und/oder das wenigstens eine lebende Moos abgestimmt. Eine vergleichsweise dicke Wandstärke ermöglicht ein Aufnehmen, Speichern und Abgeben einer vergleichsweise großen Feuchtigkeitsmenge. Eine vergleichsweise dünne Wandstärke ermöglicht ein Aufnehmen, Speichern und Abgeben einer vergleichsweise kleinen Feuchtigkeitsmenge. Durch eine konstruktive Anpassung der Wandstärke der Wabenwandungen kann das Trägergebilde somit in einfacher Weise auf art- und/oder gattungsspezifische Eigenschaften des wenigstens einen lebenden Mooses abgestimmt werden. Hierdurch kann eine nochmals verbesserte Kultivierung erreicht werden.

In weiterer Ausgestaltung der Erfindung beträgt die Wandstärke zwischen 0,6 mm und 1,2 mm. Die Erfinder haben erkannt, dass hierdurch besondere Vorteile erreicht werden können.

In weiterer Ausgestaltung der Erfindung ist eine in Dickenrichtung erstreckte Höhe der Wabenzellen auf eine erforderliche Filterleistung pro Flächeneinheit abgestimmt. Die Filterleistung pro Flächeneinheit des Filtersubstrates wird insbesondere durch dessen parallel zur Durchströmungsrichtung orientierte Dicke bestimmt. Bei einem herkömmlichen Aufbau des Filtergebildes mit einem ebenen, flächig angeordneten Filtersubstrat ist die Dicke des lebenden Mooses bzw. des Filtersubstrates nicht ohne weiteres beeinflussbar. Denn eine Wuchsdicke bzw. -höhe des lebenden Mooses ist üblicherweise durch dessen spezifische biologische Eigenschaften begrenzt. Die erfindungsgemäße Gestaltung des Trägergebildes gestattet demgegenüber eine einfache konstruktive Anpassung der Höhe der Wabenzellen und damit der Dicke des Filtersubstrates. Dies ist eine besonders vorteilhafte Ausgestaltung der Erfindung.

In weiterer Ausgestaltung der Erfindung beträgt die Höhe zwischen 8,5 mm und 25 mm. Der vorgenannte Wertebereich für die Höhe der Wabenzellen hat sich in der Praxis als besonders vorteilhaft erwiesen.

In weiterer Ausgestaltung der Erfindung ist eine jeweilige von den Wabenwandungen umgrenzte Querschnittsfläche der Wabenzellen auf das wenigstens eine lebende Moos abgestimmt. Die Querschnittsfläche kann je nach Art und/oder Gattung des lebenden Mooses vergleichsweise kleiner oder größer dimensioniert sein. Hierdurch kann eine nochmals verbesserte Kultivierung des lebenden Mooses erreicht werden.

In weiterer Ausgestaltung der Erfindung beträgt die umgrenzte Querschnittsfläche zwischen 20,4 mm² und 88,6 mm². Mit einer Dimensionierung der Querschnittsfläche der Wabenzellen in dem vorgenannten Wertebereich kann insbesondere eine nochmals verbesserte Kultivierung des lebenden Mooses erreicht werden.

In weiterer Ausgestaltung der Erfindung ist die Wabenstruktur formnachgiebig gestaltet. Formnachgiebig meint, dass die Wabenstruktur elastisch und/oder plastisch dehnbar, stauchbar und/oder biegbar ist. Hierdurch kann das Trägergebilde in einfacher Weise an eine Form und/oder Gestalt eines zur Aufnahme des Filtergebildes vorgesehenen Einbauraums des Luftreinigungssystems angepasst werden. Die formnachgiebige Gestaltung kann insbesondere durch eine entsprechende Materialwahl erreicht sein. Hierzu ist die Wabenstruktur vorzugsweise aus einem Textilmaterial, besonders bevorzugt aus einem dreidimensionalen Gewirke, gefertigt.

In weiterer Ausgestaltung der Erfindung sind die Wabenzellen gleichförmig gestaltet. Hierdurch kann eine örtlich gleichmäßige Verteilung der Filtereigenschaften erreicht werden. Vorzugsweise sind die Wabenzellen in Größe und Form identisch gestaltet.

In weiterer Ausgestaltung der Erfindung weisen die Wabenzellen jeweils eine rautenförmige Querschnittsform auf. Eine solche Gestaltung hat sich in der Praxis als besonders vorteilhaft erwiesen. Insbesondere kann durch die rautenförmige Querschnittsform eine hinreichende Formnachgiebigkeit der Wabenstruktur erreicht und/oder unterstützt werden.

Die Erfindung betrifft zudem ein Luftreinigungssystem mit wenigstens einem Filtergebilde nach der vorstehenden Beschreibung und mit wenigstens einer Durchlüftungseinheit, die zur aktiven Durchlüftung des wenigstens einen Filtergebildes mit einem Luftmassenstrom vorgesehen ist. Die Durchlüftungseinheit ist vorzugsweise in Form eines Ventilators oder Lüfters gestaltet. Im Betrieb des Luftreinigungssystems fördert die Durchlüftungseinheit den Luftmassenstrom durch das Filtergebilde. Der Luftmassenstrom kann auch als Förderstrom bezeichnet werden. Hierdurch wird eine aktive Durchlüftung des Filtergebildes erreicht.

In weiterer Ausgestaltung der Erfindung sind die Wabenwandungen des wenigstens einen Filtergebildes jeweils parallel zu dem mittels der Durchlüftungseinheit bewirkten und durch das Filtergebilde strömenden Luftmassenstrom orientiert. Hierdurch werden ungewollte Druckverluste vermieden und eine besonders effiziente aktive Durchlüftung erreicht.

In weiterer Ausgestaltung der Erfindung ist der Durchlüftungseinheit eine Zerstäubungseinheit zugeordnet, wobei die Zerstäubungseinheit der Durchlüftungseinheit in Strömungsrichtung des Luftmassenstroms vorgelagert und zur Zerstäubung von Wasser zur Befeuchtung des Luftmassenstroms eingerichtet ist. Die Zerstäubungseinheit erhöht die Luftfeuchtigkeit des mittels der Durchlüftungseinheit durch das Filtergebilde geförderten Luftmassenstroms. Hierzu zerstäubt die Zerstäubungseinheit Wasser. Hierdurch wird einem nachteiligen Austrocknen des wenigstens einen lebenden Mooses auf besonders einfache aber wirkungsvolle Weise entgegengewirkt. Zur Zerstäubung des Wassers weist die Zerstäubungseinheit vorzugsweise wenigstens eine Zerstäubungs- oder Sprühdüse auf, mittels welcher das Wasser zerstäub- und in den Luftmassenstrom einsprühbar ist. Durch das Zerstäuben wird ein Wassernebel oder auch Wasserschleier gebildet, der die Luftfeuchtigkeit des Luftmassenstroms erhöht.

In weiterer Ausgestaltung der Erfindung ist der Durchlüftungseinheit ein durchlüftbares Speichergebilde zugeordnet, wobei das Speichergebilde der Durchlüftungseinheit in Strömungsrichtung des Luftmassenstroms nachgelagert und zum Speichern und Abgeben von Feuchtigkeit zur Befeuchtung des Luftmassenstroms eingerichtet ist. Das Speichergebilde ist in Bezug auf die Strömungsrichtung des Luftmassenstroms zwischen der Durchlüftungseinheit und dem wenigstens einen Filtergebilde angeordnet. Dabei ist das Speichergebilde durchlüftbar gestaltet, so dass der mittels der Durchlüftungseinheit geförderte Luftmassenstrom einends in das Speichergebilde eintritt und andernends aus diesem in Richtung des wenigstens einen Filtergebildes austritt. Zu diesem Zweck kann das Speichergebilde insbesondere eine poröse, offenporige, schwammartige, wabenförmige oder auf sonstige Weise eine Durchlüftung gewährleistende Gestalt aufweisen. Das Speichergebilde ist zum Speichern der Feuchtigkeit bzw. von Wasser eingerichtet. In Folge der aktiven Durchlüftung des Speichergebildes wird die in diesem gespeicherte Feuchtigkeit an den Luftmassenstrom abgegeben, so dass dieser befeuchtet wird. Hierdurch kann einem unerwünschten Austrocknen des wenigstens einen lebenden Mooses auf besonders einfache und dennoch wirkungsvolle Weise entgegengewirkt werden.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt in schematischer Perspektivdarstellung eine Ausführungsform eines erfindungsgemäßen Luftreinigungssystems, das mit mehreren Filtergebilden gemäß einer Ausführungsform der Erfindung versehen ist, wobei einzelne Bauteile und/oder Abschnitte zeichnerisch ausgeblendet sind,
- Fig. 2: in schematischer Perspektivdarstellung eine der Filtergebilde nach Fig. 1 mit einem Trägergebilde und einem Filtersubstrat,
- Fig. 3: in abgeschnittener perspektivischer Detaildarstellung einen Bereich III der Filtergebilde nach Fig. 2,
- Fig. 4: in schematisch stark vereinfachter Querschnittsdarstellung einen Teilbereich des Trägergebildes,
- Fig. 5: eine schematisch stark vereinfachte und teilweise abgeschnittene Längsschnittdarstellung des Trägergebildes und
- Fig. 6: eine schematisch stark vereinfachte, flußdiagrammartige Darstellung einer weiteren Ausführungsform eines erfindungsgemäßen Luftreinigungssystems.

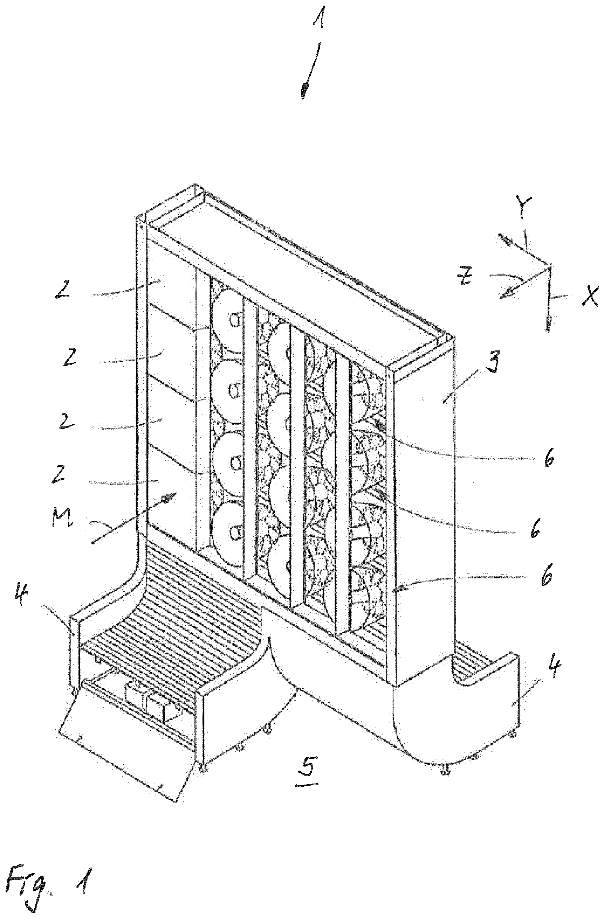

Gemäß Fig. 1 ist ein Luftreinigungssystem 1 zur Filterung von Umgebungsluft und insoweit zur Verbesserung der Luftqualität in verkehrsbelasteten Stadtbereichen vorgesehen. Das Luftreinigungssystem 1 weist mehrere Filtergebilde 2 auf, die vorliegend an einem im Wesentlichen vertikal erstreckten Tragrahmen 3 in Breiten- und Hochrichtung des Tragrahmens 3 zueinander benachbart angeordnet sind. Aus Gründen der verbesserten Darstellbarkeit sind vorliegend lediglich vier Filtergebilde 2 gezeigt. Der Tragrahmen 3 ist bei der gezeigten Ausführungsform in Form einer geschraubten Blechprofilkonstruktion ausgebildet und mittels zweier Stützgestelle 4 auf einer horizontal orientierten Aufstellfläche 5 abgestützt.

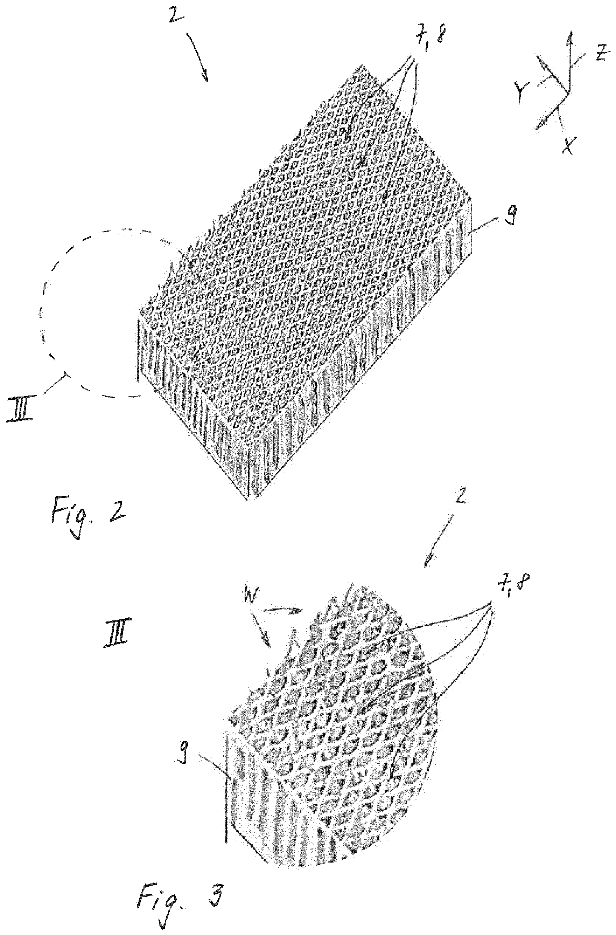

Zudem weist das Luftreinigungssystem 1 mehrere Durchlüftungseinheiten 6 auf, wobei vorliegend jedem Filtergebilde 2 jeweils eine Durchlüftungseinheit 6 zugeordnet ist. Die Durchlüftungseinheiten 6 sind bei der gezeigten Ausführungsform jeweils in Form eines elektrisch angetriebenen Ventilators 6 ausgebildet. Im Betrieb des Luftreinigungssystems 1 fördert jede Durchlüftungseinheit 6 einen Luftmassenstrom M durch das ihr zugeordnete Filtergebilde 2. Gegenüber einer bloßen windbewegten Anströmung der Filtergebilde 2 kann somit vorliegend auch von einer aktiven Durchlüftung gesprochen werden. Die Filtereinheiten 2 werden bei der aktiven Durchlüftung in Dickenrichtung Z (Fig. 2) durchströmt. Mit anderen Worten ausgedrückt ist der Luftmassenstrom M parallel oder antiparallel zur Dickenrichtung Z gerichtet.

Wie anhand der Fig. 2 und 3 ersichtlich ist, weisen die Filtergebilde 2 jeweils wenigstens ein lebendes Moos 7 auf, das unter Ausbildung eines Filtersubstrates 8 auf einem Trägergebilde 9 angeordnet und kultiviert ist. Das lebende Moos 7 bzw. das Filtersubstrat 8 dient als Luftfilter zur Filterung der Umgebungsluft. Das Trägergebilde 9 trägt und stützt das Filtersubstrat 8 und fungiert gleichzeitig als Substrat beim Heranzüchten des lebenden Mooses 7 zur Ausbildung des Filtersubstrates 8.

Zur Vermeidung von Wiederholungen wird nachfolgend lediglich auf eines der Filtergebilde 2 nach Fig. 1 eingegangen. Die diesbezügliche Offenbarung gilt in entsprechender Weise für die verbleibenden Filtergebilde 2 des Luftreinigungssystems 1.

Um eine möglichst effiziente aktive Durchlüftung des Filtergebildes 2 und gleichzeitig eine vorteilhafte Kultivierung des lebenden Mooses 7 zu ermöglichen, weist das Trägergebilde 9 eine spezifische Wabenstruktur W auf. Die Wabenstruktur W ist aus einer Vielzahl von Wabenzellen 10 gebildet. Das lebende Moos 7 bzw. das Filtersubstrat 8 ist in den Wabenzellen 10 angeordnet und kultiviert. Die Wabenzellen 10 sind von Wabenwandungen 11 umgrenzt. Um Druckverluste bei der aktiven Durchlüftung zu vermeiden, sind die Wabenwandungen 11 parallel zur Dickenrichtung Z des Filtersubstrats 8 erstreckt. Zudem sind die Wabenwandungen 11 auf noch näher beschriebene Weise saugfähig gestaltet. Durch die saugfähige Gestaltung können die Wabenwandungen 11 Feuchtigkeit aufnehmen, speichern und an das lebende Moos 7 bzw. das Filtersubstrat 8 abgeben. Hierdurch wird insbesondere einem nachteiligen Austrocknen des Filtersubstrates 8 und somit einer Unterversorgung des lebenden Mooses 7 mit Nährstoffen entgegengewirkt. Dies ermöglicht eine besonders vorteilhafte Kultivierung des lebenden Mooses 7 sowohl beim Heranzüchten des Filtersubstrates 8 als auch im späteren Filterbetrieb.

Die Wabenzellen 10 sind bei der gezeigten Ausführungsform jeweils durchgängig zwischen einer Lufteintrittsseite LE und einer Luftaustrittsseite LA des Filtergebildes 2 erstreckt. Auf diese Weise bilden die Wabenzellen 10 jeweils einen beidseits offenen Durchlüftungskanal 12 aus. Bei der aktiven Durchlüftung des Filtergebildes 2 mittels der Durchlüftungseinheit 6 strömt die zu filternde Umgebungsluft ausgehend von der Lufteintrittsseite LE in die Wabenzellen 10 bzw. die Durchlüftungskanäle 12, wird hierbei durch das in den Wabenzellen 10 bzw. den Durchlüftungskanälen 12 angeordnete lebende Moos 7 geleitet und gefiltert und tritt auf der Luftaustrittsseite LA aus des Filtergebildes 2 aus. Die Wabenwandungen 11 sind bei der gezeigten Ausführungsform jeweils gerade und eben erstreckt, so dass die Durchlüftungskanäle 12 gerade und ohne Krümmung verlaufen.

Bei einer nicht gezeigten Ausführungsform kann die Dickenrichtung Z einen gekrümmten Verlauf aufweisen. Bei dieser nicht gezeigten Ausführungsform sind dementsprechend auch die Wabenwandungen 11 und die Durchlüftungskanäle 12 gekrümmt erstreckt.

Bei der gezeigten Ausführungsform ist das Trägergebilde 9 aus einem dreidimensionalen Gewirke gefertigt. Das dreidimensionale Gewirke kann auch als 3D-Gewirke oder Abstandsgewirke bezeichnet werden. Das dreidimensionale Gewirke weist saugfähige Eigenschaften auf. Das dreidimensionale Gewirke kann aus einem Textilmaterial, insbesondere aus Natur- und/oder Kunstfasern, gefertigt sein.

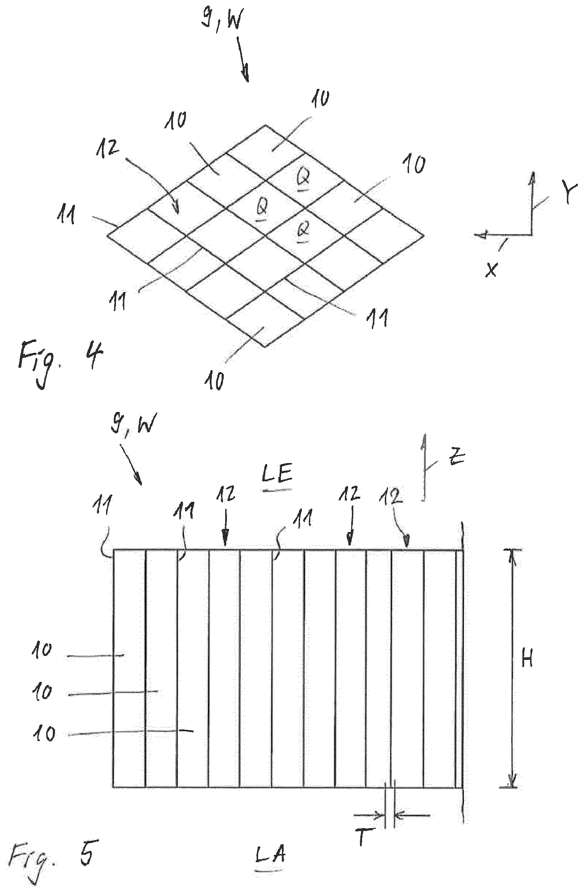

Eine anhand der Fig. 4 und 5 ersichtliche Wandstärke T der Wabenwandungen 11 ist als nicht maßstäblich zu verstehen. Je nach Bemessung der Wandstärke T können die Wabenwandungen 11 eine vergleichsweise größere oder kleinere Feuchtigkeitsmenge aufnehmen, speichern und an das lebende Moos 7 abgeben. Die Wandstärke T ist konstruktiv mit einfachen Mitteln anpassbar. Auf diese Weise können die wasserspeichernden Eigenschaften des Trägergebildes 9 an eine spezifische Art und/oder Gattung und einen damit einhergehenden spezifischen Wasserbedarf des lebenden Mooses 7 angepasst werden.

Weiter weist das Trägergebilde 9 eine in Dickenrichtung Z erstreckte Höhe H auf (Fig. 5). Eine Filterleistung des Filtergebildes 2 ist mittels einer konstruktiven Anpassung der Höhe H auf einfache Weise variierbar. Denn die Höhe H ist maßgeblich für ein in den Wabenzellen 10 angeordnetes Volumen des lebenden Mooses 7 bzw. des Filtersubstrates 8. Je nach Volumen des lebenden Mooses pro - auf eine X-Y-Ebene bezogene - Flächeneinheit ergeben sich unterschiedliche Filterleistungen.

Weiter weisen die Wabenzellen 10 jeweils eine von den Wabenwandungen 11 umgrenzte Querschnittsfläche Q auf. Die Querschnittsfläche Q ist in Bezug auf eine zwischen einer Längsrichtung X und einer Querrichtung Y des Filtergebildes 2 aufgespannte X-Y-Ebene zu verstehen (Fig. 4). Die Querschnittsfläche Q ist vorliegend auf die spezifischen Anforderungen der Art und/oder der Gattung des lebenden Mooses 7 abgestimmt. Denn je nach Art und/oder Gattung können vergleichsweise enge oder weite Wabenzellen 10 zur Kultivierung des lebenden Mooses 7 vorteilhaft sein.

Die Wabenzellen 10 weisen bei der gezeigten Ausführungsform jeweils eine etwa rautenförmige Grundform auf (Fig. 4). Eine solche Gestaltung ist jedoch nicht zwingend. Bei einer nicht gezeigten Ausführungsform können die Wabenzellen abweichend von der vorliegenden Gestaltung drei-, fünf-, oder beliebig mehreckig, verrundet, elliptisch sowie kreisförmig in ihrer Querschnittsform gestaltet sein.

Die anhand Fig. 2 ersichtliche mattenförmige Gestalt des Filtergebildes 2 ist bei Bedarf an unterschiedliche Einbausituationen anpassbar. Diese Anpassbarkeit resultiert aus einer formnachgiebigen Gestaltung des Trägergebildes 9 und der naturgemäß gegebenen Nachgiebigkeit des lebenden Mooses 7. Die formnachgiebige Gestaltung des Trägergebildes 9 resultiert aus der vorliegenden Materialwahl für die Wabenwandungen 11. Dabei ist bei der gezeigten Ausführungsform das gesamte Trägergebilde 9 aus dem besagten Vliesstoff gefertigt.

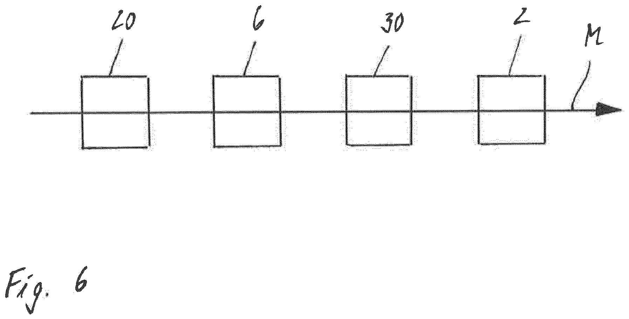

Anhand Fig. 6 ist eine schematisch stark vereinfachte und flußdiagrammartige Darstellung einer weiteren Ausgestaltung des Luftreinigungssystems gezeigt, bei welcher der Durchlüftungseinheit 6 eine Zerstäubungseinheit 20 und ein Speichergebilde 30 zugeordnet ist. Die Zerstäubungseinheit 20 ist der Durchlüftungseinheit 6 in Hauptströmungsrichtung des Luftmassenstroms M vorgelagert und zur Zerstäubung von Wasser zur Befeuchtung des Luftmassenstroms M eingerichtet. Mittels der Zerstäubungseinheit 20 wird Wasser zu einem feinen Nebel oder Wasserschleier zerstäubt und in den Luftmassenstrom M eingebracht. Hierdurch wird die Luftfeuchtigkeit des Luftmassenstroms M erhöht und einem Austrocknen des wenigstens einen lebenden Mooses des Filtergebildes 2 entgegengewirkt. Zur Zerstäubung des Wassers kann die Zerstäubungseinheit 20 wenigstens eine Sprühdüse oder dergleichen aufweisen.

Bei der gezeigten Ausführungsform ist zudem ein Speichergebilde 30 vorgesehen und in Strömungsrichtung des Luftmassenstroms M zwischen der Durchlüftungseinheit 6 und dem Filtergebilde 2 angeordnet. Das Speichergebilde 30 ist durchlüftbar gestaltet, so dass der mittels der Durchlüftungseinheit 6 geförderte Luftmassenstrom M einends in das Speichergebilde 30 eintritt und andernends in Richtung des Filtergebildes 2 aus dem Speichergebilde 30 austritt. Das Speichergebilde 30 ist zum Speichern und Abgeben von Feuchtigkeit bzw. Wasser zum Befeuchten des Luftmassenstroms M eingerichtet. Zu diesem Zweck kann das Speichergebilde 30 insbesondere eine poröse, offenporige, schwammförmige, wabenförmige oder sonstige zum Durchlüften sowie Speichern und Abgeben von Wasser geeignete Gestaltgebung aufweisen.

Bei der anhand Fig. 6 gezeigten Ausführungsform sind die Zerstäubungseinheit 20 und das Speichergebilde 30 in Kombination vorgesehen, was jedoch nicht zwingend notwendig ist. Bei einer nicht gezeigten Ausführungsform ist lediglich die Zerstäubungseinheit vorgesehen. Bei einer weiteren nicht gezeigten Ausführungsform ist lediglich das Speichergebilde vorgesehen.

## Patentansprüche

1. Filtergebilde (2) für ein aktiv durchlüftetes Luftreinigungssystem (1) mit einem aus wenigstens einem lebenden Moos (7) gebildeten Filtersubstrat (8), das zur Durchlüftung entlang einer Dickenrichtung (Z) vorgesehen ist, sowie mit einem Trägergebilde (9), auf welchem das Filtersubstrat (8) kultiviert und angeordnet ist, **dadurch gekennzeichnet, dass** das Trägergebilde (9) eine Wabenstruktur (W) aufweist, die aus einer Vielzahl von Wabenzellen (10) gebildet ist, in welchen das Filtersubstrat (8) kultiviert und angeordnet ist und deren Wabenwandungen (11) parallel zur Dickenrichtung (Z) des Filtersubstrates (8) erstreckt sowie saugfähig gestaltet sind.

2. Filtergebilde (2) nach Anspruch 1, **dadurch gekennzeichnet, dass** die Wabenzellen (10) jeweils einen zwischen einer Lufteintrittsseite (LE) und einer Luftaustrittsseite (LA) des Filtergebildes (2) durchgängig längserstreckten Durchlüftungskanal (12) bilden.

3. Filtergebilde (2) nach Anspruch 1 oder 2, **dadurch gekennzeichnet, dass** die Wabenwandungen (11) aus einem saugfähigen Material gefertigt sind.

4. Filtergebilde (2) nach einem der vorhergehenden Ansprüche, **dadurch gekennzeichnet, dass** das Trägergebilde (9) aus einem dreidimensionalen Gewirke gefertigt ist.

5. Filtergebilde (2) nach Anspruch 3 oder 4, **dadurch gekennzeichnet, dass** eine Wandstärke (T) der Wabenwandungen (11) auf eine erforderliche Feuchtigkeitsmenge und/oder das wenigstens eine lebende Moos (7) abgestimmt ist.

6. Filtergebilde (2) nach Anspruch 5, **dadurch gekennzeichnet, dass** die Wandstärke (T) zwischen 0,6 mm und 1,2 mm beträgt.

7. Filtergebilde (2) nach einem der vorhergehenden Ansprüche, **dadurch gekennzeichnet, dass** eine in Dickenrichtung (Z) erstreckte Höhe (H) der Wabenzellen (10) auf eine erforderliche Filterleistung pro Flächeneinheit abgestimmt ist.

8. Filtergebilde (2) nach Anspruch 7, **dadurch gekennzeichnet, dass** die Höhe (H) zwischen 8,5 mm und 25 mm beträgt.

9. Filtergebilde (2) nach einem der vorhergehenden Ansprüche, **dadurch gekennzeichnet, dass** eine jeweilige von den Wabenwandungen (11) umgrenzte Querschnittsfläche (Q) der Wabenzellen (10) auf das wenigstens eine lebende Moos (7) abgestimmt ist.

10. Filtergebilde (2) nach Anspruch 9, **dadurch gekennzeichnet, dass** die umgrenzte Querschnittsfläche (Q) zwischen 20,4 mm² und 88,6 mm² beträgt.

11. Filtergebilde (2) nach einem der vorhergehenden Ansprüche, **dadurch gekennzeichnet, dass** die Wabenstruktur (W) formnachgiebig gestaltet ist und/oder dass die Wabenzellen (10) gleichförmig gestaltet sind und/oder dass die Wabenzellen (10) jeweils eine rautenförmige Querschnittsform aufweisen.

12. Luftreinigungssystem (1) mit wenigstens einem Filtergebilde (2) nach einem der vorhergehenden Ansprüche und mit wenigstens einer Durchlüftungseinheit (6), die zur aktiven Durchlüftung des wenigstens einen Filtergebildes (2) mit einem Luftmassenstrom (M) vorgesehen ist.

13. Luftreinigungssystem (1) nach Anspruch 12, **dadurch gekennzeichnet, dass** die Wabenwandungen (11) des wenigstens einen Filtergebildes (2) jeweils parallel zu dem mittels der Durchlüftungseinheit (6) bewirkten und durch das Filtergebilde (2) strömenden Luftmassenstrom (M) orientiert sind.

14. Luftreinigungssystem (1) nach Anspruch 12 oder 13, **dadurch gekennzeichnet, dass** der Durchlüftungseinheit (6) eine Zerstäubungseinheit (20) zugeordnet ist, wobei die Zerstäubungseinheit (20) der Durchlüftungseinheit (6) in Strömungsrichtung des Luftmassenstroms (M) vorgelagert und zur Zerstäubung von Wasser zur Befeuchtung des Luftmassenstroms (M) eingerichtet ist.

15. Luftreinigungssystem (1) nach einem der Ansprüche 12 bis 14, **dadurch gekennzeichnet, dass** der Durchlüftungseinheit (6) ein durchlüftbares Speichergebilde (30) zugeordnet ist, wobei das Speichergebilde (30) der Durchlüftungseinheit (6) in Strömungsrichtung des Luftmassenstroms (M) nachgelagert und zum Speichern und Abgeben von Feuchtigkeit zur Befeuchtung des Luftmassenstroms (M) eingerichtet ist.

## Claims

1. A filter fabric (2) for an actively ventilated air purification system (1) having a filter substrate (8) formed from at least one live moss (7) and provided along a thickness direction (Z) for ventilation, and having a carrier fabric (9) on which the filter substrate (8) is cultivated and arranged, **characterized in that** the carrier fabric (9) has a honeycomb structure (W) formed from a plurality of honeycomb cells (10) in which the filter substrate (8) is cultivated and arranged and whose honeycomb walls (11) extend parallel to the thickness direction (Z) of the filter substrate (8) and are designed to be absorbent.

2. The filter fabric (2) according to claim 1, **characterized in that** the honeycomb cells (10) each form a continuously and longitudinally extending ventilation duct (12) between an air inlet side (LE) and an air outlet side (LA) of the filter fabric (2).

3. The filter fabric (2) according to claim 1 or 2, **characterized in that** the honeycomb walls (11) are made from an absorbent material.

4. The filter fabric (2) according to any of the preceding claims, **characterized in that** the carrier fabric (9) is made from a three-dimensional knitted fabric.

5. The filter fabric (2) according to claim 3 or 4, **characterized in that** a wall thickness (T) of the honeycomb walls (11) is adapted to a required moisture quantity and/or to the at least one live moss (7).

6. The filter fabric (2) according to claim 5, **characterized in that** the wall thickness (T) is between 0.6 mm and 1.2 mm.

7. The filter fabric (2) according to any of the preceding claims, **characterized in that** a height (H) of the honeycomb cells (10) extending in the thickness direction (Z) is adapted to a required filter capacity per unit of area.

8. The filter fabric (2) according to claim 7, **characterized in that** the height (H) is between 8.5 mm and 25 mm.

9. The filter fabric (2) according to any of the preceding claims, **characterized in that** a respective cross-sectional area (Q) of the honeycomb cells (10) enclosed by the honeycomb walls (11) is adapted to the at least one live moss (7).

10. The filter fabric (2) according to claim 9, **characterized in that** the enclosed cross-sectional area (Q) is between 20.4 mm² and 88.6 mm².

11. The filter fabric (2) according to any of the preceding claims, **characterized in that** the honeycomb structure (W) is designed in yielding form and/or that the honeycomb cells (10) are designed uniform and/or that the honeycomb cells (10) each have a rhombic cross-sectional form.

12. An air purification system (1) having at least one filter fabric (2) according to any of the preceding claims and at least one ventilation unit (6) provided for active ventilation of the at least one filter fabric (2) with an air mass flow (M).

13. The air purification system (1) according to claim 12, **characterized in that** the honeycomb walls (11) of the at least one filter fabric (2) are each oriented parallel to the air mass flow (M) effected by means of the ventilation unit (6) and flowing through the filter fabric (2).

14. The air purification system (1) according to claim 12 or 13, **characterized in that** an atomizing unit (20) is associated with the ventilation unit (6), wherein the atomizing unit (20) is upstream of the ventilation unit (6) in the flow direction of the air mass flow (M) and is configured to atomize water for moistening the air mass flow (M).

15. The air purification system (1) according to any of claims 12 to 14, **characterized in that** a ventilatable storage fabric (30) is associated with the ventilation unit (6), wherein the storage fabric (30) is downstream of the ventilation unit (6) in the flow direction of the air mass flow (M) and is configured to store and dispense moisture for moistening the air mass flow (M).

## Revendications

1. Structure filtrante (2) pour un système de purification de l'air activement ventilé (1) avec au moins un substrat filtrant (8) constitué au moins d'une mousse vivante (7) qui est prévue pour le renouvellement d'air le long d'un sens de l'épaisseur (Z), ainsi qu'avec une structure de support (9) sur laquelle le substrat filtrant (8) est cultivé et disposé, **caractérisé en ce que** la structure de support (9) présente une structure alvéolaire (W) qui est constituée d'une pluralité de cellules alvéolaires (10) dans lesquelles le substrat filtrant (8) est cultivé et disposé et dont les parois alvéolaires (11) sont conçues étendues parallèlement au sens de l'épaisseur (Z) du substrat filtrant (8), et absorbantes.

2. Structure filtrante (2) selon la revendication 1, **caractérisée en ce que** les cellules alvéolaires (10) forment respectivement un canal de renouvellement d'air (12) étendu en continu sur la longueur entre un côté d'arrivée de l'air (LE) et d'un côté de sortie de l'air (LA) de la structure filtrante (2).

3. Structure filtrante (2) selon la revendication 1 ou 2, **caractérisée en ce que** les parois alvéolaires (11) sont fabriquées dans un matériau absorbant.

4. Structure filtrante (2) selon l'une des revendications précédentes, **caractérisée en ce que** la structure de support (9) est fabriquée dans un tissu à mailles tridimensionnel.

5. Structure filtrante (2) selon la revendication 3 ou 4, **caractérisée en ce qu'**une épaisseur de paroi (T) des parois alvéolaires (11) est adaptée à une quantité d'humidité requise et/ou à ladite au moins une mousse vivante (7).

6. Structure filtrante (2) selon la revendication 5, **caractérisée en ce que** l'épaisseur de paroi (T) est comprise entre 0,6 mm et 1,2 mm.

7. Structure filtrante (2) selon l'une des revendications précédentes, **caractérisée en ce qu'**une hauteur (H) des cellules alvéolaires (10) étendue dans le sens de l'épaisseur (Z) est adaptée à une puissance de filtration requise par unité de surface.

8. Structure filtrante (2) selon la revendication 7, **caractérisée en ce que** la hauteur (H) est comprise entre 8,5 mm et 25 mm.

9. Structure filtrante (2) selon l'une des revendications précédentes, **caractérisée en ce qu'**une section transversale (Q) des cellules alvéolaires (10), entourée respectivement par les parois alvéolaires (11) est adaptée à ladite au moins une mousse vivante (7).

10. Structure filtrante (2) selon la revendication 9, **caractérisée en ce que** la section transversale (Q) entourée est comprise entre 20,4 mm² et 88,6 mm².

11. Structure filtrante (2) selon l'une des revendications précédentes, **caractérisée en ce que** la structure alvéolaire (W) est conçue à souplesse de forme et/ou que les cellules alvéolaires (10) sont conçues de même forme et/ou que les cellules alvéolaires (10) présentent respectivement une section en forme de losange.

12. Système de purification de l'air (1) avec au moins une structure filtrante (2) selon l'une des revendications précédentes et avec au moins une unité de renouvellement de l'air (6) qui est prévue pour le renouvellement actif de l'air de ladite au moins une structure filtrante (2) avec un flux massique d'air (M).

13. Système de purification de l'air (1) selon la revendication 12, **caractérisé en ce que** les parois alvéolaires (11) de ladite au moins une structure filtrante (2) sont orientés respectivement parallèlement au flux massique d'air (M) produit au moyen de l'unité de renouvellement d'air (6) et s'écoulant à travers la structure filtrante (2).

14. Système de purification de l'air (1) selon la revendication 12 ou 13, **caractérisé en ce qu'**une unité de vaporisation (20) est associée à l'unité de renouvellement d'air (6), sachant que l'unité de vaporisation (20) est montée en amont de l'unité de renouvellement de l'air (6) dans le sens d'écoulement du flux massique d'air (M) et est conçue pour la vaporisation d'eau afin d'humidifier le flux massique d'air (M).

15. Système de purification de l'air (1) selon la revendication 12 à 14, **caractérisé en ce qu'**une structure de stockage (30) aérable est associée à l'unité de renouvellement d'air (6), sachant que l'unité de stockage (30) est montée en aval de l'unité de renouvellement d'air (6) dans le sens d'écoulement du flux massique d'air (M) et est conçue pour stocker et dégager de l'humidité afin d'humidifier le flux massique d'air (M).
